# EUROPÄISCHE PATENTSCHRIFT

(11) **EP 2 263 265 B1**
(45) Veröffentlichungstag und Bekanntmachung des Hinweises auf die Patenterteilung: **03.08.2011**
(21) Anmeldenummer: 09778530.7
(22) Anmeldetag: 15.09.2009
(51) Int. Cl.: H01L 31/042

(54) **VERFAHREN ZUM BETRIEB EINER PHOTOVOLTAIKANLAGE**
METHOD OF OPERATION OF A PHOTOVOLTAIC INSTALLATION
MÉTHODE D'EXPLOITATION D'UNE INSTALLATION PHOTOVOLTAÏQUE

(30) Priorität: 28.04.2009 DE 102009014666; 28.04.2009 DE 102009011886; 27.05.2009 DE 202009007556 U
(43) Veröffentlichungstag der Anmeldung: 22.12.2010
(73) Patentinhaber: Eulektra GmbH, 46485 Wesel (DE)
(72) Erfinder: HAIN, Siegfried, 46499 Hamminkeln (DE)
(74) Vertreter: Nunnenkamp, Jörg
(86) Internationale Anmeldenummer: PCT/EP2009/006666
(87) Internationale Veröffentlichungsnummer: WO 2010/124709

(56) Entgegenhaltungen:
- WO-A1-2005/089020
- WO-A1-2005/089020
- DE-A1- 10 341 169
- DE-A1-102006 004 712
- DE-A1-102006 030 751
- US-A- 3 821 512
- US-A1- 2004 004 066

## Beschreibung

Die Erfindung betrifft ein Verfahren zum Betrieb einer Photovoltaikanlage, mit wenigstens einer Solarzelle, und mit zumindest einem nachgeordneten Schaltelement, welches zur Änderung der Stromrichtung und Darstellung eines Energieerzeugungs- oder Heizmodus eingerichtet ist, wobei ein oder mehrere Sensoren vorgesehen sind, und wobei die Sensoren und das Schaltelement an eine gemeinsame Steueranlage angeschlossen sind, welche das Schaltelement je nach mittels der Sensoren erfasster Messwerte in den Energieerzeugungsmodus oder Heizmodus überführt.

Photovoltaikanlagen, die unter Rückgriff auf eine oder mehrere Solarzellen kurzwellige Strahlungsenergie, in der Regel Sonnenlicht, direkt in elektrische Energie umwandeln, sind in vielfältiger Art und Weise bekannt. Diese Tatsache beruht im Wesentlichen auf dem hiermit genutzten photovoltaischen Effekt, welcher einen Sonderfall des inneren photoelektrischen Effektes beschreibt. Tatsächlich sind Solarzellen üblicherweise aus Halbleitermaterialien aufgebaut und funktionieren ähnlich wie großflächige Photodioden. Im Unterschied zu diesen werden Solarzellen jedoch nicht als Strahlungsdetektor, sondern als elektrische Stromquelle betrieben.

Dabei machen sich Solarzellen die Besonderheit von Halbleitern zu Nutze, dass durch zugeführte Energie in Form der elektromagnetischen Strahlung (Sonnenlicht) freie Ladungsträger (Elektronen und Löcher) erzeugt werden. Um aus diesen Ladungen einen elektrischen Strom zu generieren, ist ein internes elektrisches Feld nötig, welches durch einen p-n-Übergang in dem Halbleiter erzeugt wird.

Da die eingestrahlte kurzwellige elektromagnetische Strahlung bzw. das Sonnenlicht in Halbleitern mit zunehmender Eindringtiefe exponentiell schwächer wird, muss der fragliche p-n-Übergang möglichst nahe an der Oberfläche angesiedelt sein. Zu diesem Zweck wird regelmäßig eine dünne Oberflächenschicht stark n-dotiert, während die dicke Schicht darunter schwach p-dotiert wird. Wenn in der Übergangszone im Bereich des p-n-Überganges nun Photonen einfallen und Elektronen-Loch-Paare durch den Photoeffekt erzeugen, so werden durch das elektrische Feld die Löcher zum untenliegenden p-Material beschleunigt, wohingegen die Elektronen umgekehrt zum n-Kontakt auf der sonnenzugewandten Oberfläche beschleunigt werden.

Zwar geht bei diesem Vorgang ein Teil der Ladungsträger durch Rekombination oder auch durch Wärme verloren. Der verbleibende Photostrom kann aber direkt von einem Verbraucher genutzt, in einem Akkumulator zwischengespeichert oder beispielsweise mit Hilfe eines Wechselrichters in ein Stromnetz eingespeist werden. Bei gebräuchlichen Solarzellen aus beispielsweise kristallinem Silizium liegt die elektrische Ausgangsspannung bei maximaler Leistung in etwa im Bereich von ca. 0,5 Volt.

Derartige Photovoltaikanlagen haben sich grundsätzlich bewährt. In diesem Zusammenhang kennt man auch die Verschaltung einzelner Solarzellen bzw. Solarzellenmodulen in Parallel- oder Reihenschaltung entsprechend der DE 10 2005 021 152 B4, um insgesamt die Ausgangsspannung zu erhöhen. Tatsächlich wird beispielsweise durch die Reihenschaltung von gleichartigen oder identischen Modulen respektive Solarzellen eine Ausgangsspannung zur Verfügung gestellt, die einem ganzzahligen Vielfachen der Spannung einer Einzelzelle bzw. eines Einzelmoduls entspricht.

Bei solchen Solarzellen respektive Solarzellenmodulen besteht ein Problem dergestalt, dass die eingestrahlte Lichtleistung beispielsweise im Winter dann stark abnimmt, wenn die betreffende Solarzelle mit einer Schneeschicht oder Eisschicht abgedeckt ist. Dadurch sinkt die von der jeweiligen Solarzelle erzeugte elektrische Leistung mehr oder minder stark. Hier hat es in der Vergangenheit entsprechend der DE 10 2006 032 876 A1 bereits Ansätze gegeben, mit einer zusätzlichen Heizung zu arbeiten, um die Schneebedeckung kurzfristig abzuschmelzen.

Im Rahmen der Lehre nach der DE 10 2006 004 712 A1 wird so vorgegangen, dass die Stromrichtung von Solarstrommodulen zu Heizzwecken umgedreht wird. In diesem Fall arbeitet die jeweilige Solarzelle als Verbraucher, und zwar als Flächenheizung. Hierdurch lässt sich die Bildung einer Schnee- bzw. Eisschicht grundsätzlich verhindern.

Die gattungsbildende Lehre nach der DE 10 2006 030 751 A1 beschäftigt sich mit einer Vorrichtung zur Nutzung von Solarenergie. Zu diesem Zweck weist die Vorrichtung eine Schalteinheit auf, welche so umschaltet, dass Energie vom Verbraucher einem das Sonnenlicht aufnehmenden Element zugeführt wird. Bei dem Schaltelement handelt es sich um einen Wechselrichter, wobei die Umschaltung sensorgesteuert erfolgen kann. Auf diese Weise soll auf dem das Sonnenlicht aufnehmenden Element befindlicher Schnee oder Eis gefahrlos entfernt werden.

Die Lehre nach der WO 2005/089020 A1 beschäftigt sich ihrerseits mit der Vermeidung einer Schnee - bzw. Eisanhäufung auf einem Dach im Bereich der Dachrinnen. Zu diesem Zwech wird eine beheizbare Ablaufrinne eingesetzt.

Der Erfindung liegt das technische Problem zugrunde, eine derartige Photovoltaikanlage so weiter zu entwickeln, dass ein automatischer und dauerhafter Betrieb unter Berücksichtigung einer maximalen Energieausbeute zur Verfügung gestellt wird.

Zur Lösung dieser technischen Problemstellung ist ein gattungsgemäßes Verfahren im Rahmen der Erfindung dadurch gekennzeichnet, dass der jeweiligen Solarzelle bzw. den mehreren Solarzellen wenigstens eine beheizbare Ablaufrinne zugeordnet ist, wobei die Ablaufrinne an einer gefälleendseitigen Kante der Solarzelle respektive eines Solarzellenmoduls angebracht ist und eine Rinnenheizung aufweist, der eine von der Steueranlage beaufschlagte Steuereinheit vorgeschaltet ist, wobei bei aktivierter Steueranlage nicht nur das Schaltelement vom Energieerzeugungsmodus in den Heizmodus überführt wird, sondern die der Rinnenheizung zugeordnete Steuereinheit zugleich dafür sorgt, dass flankierend die Rinnenheizung beaufschlagt wird, um sicherzustellen, dass entstehendes Tauwasser unmittelbar, problemlos und vollständig abgeführt wird, und wobei die Steuereinheit ergänzend dafür sorgt, dass die Rinnenheizung auch dann noch beaufschlagt wird, wenn das Schaltelement bereits wieder in den Energieerzeugungsmodus umgeschaltet worden ist.

Bei dem einen oder den mehreren Sensoren beispielsweise zur Aufnahme wettersensibler Daten kann es sich um einen Außentemperatursensor, Schneefallssensor etc. handeln. Jedenfalls lässt sich zunächst einmal ein automatischer Betrieb der erfindungsgemäßen Photovoltaikanlage darstellen, der bisher in dieser Konsequenz keinen Niederschlag im Stand der Technik gefunden hat.

Denn mit Hilfe der Steueranlage wird sichergestellt, dass das Schaltelement zur Änderung der Stromrichtung und Darstellung des Energieerzeugungs- oder Heizmodus von der Steueranlage beaufschlagt wird, und zwar je nach mittels des jeweiligen Sensors erfasster Messwerte. Tatsächlich sorgt die Steueranlage dafür, dass das Schaltelement entweder in den Energieerzeugungsmodus oder den Heizmodus überführt wird. Im Energieerzeugungsmodus sorgt die Solarzelle unter Berücksichtigung des bereits beschriebenen photovoltaischen Effektes dafür, dass das einfallende Sonnenlicht bzw. kurzweilige Strahlungsenergie in elektrische Energie umgewandelt und in einen Solarzellenstromkreis überführt wird. In diesem Energieerzeugungsmodus gibt die eine oder geben die mehreren Solarzellen folglich elektrische Energie ab, die von einem Zähler registriert und vergütet wird. Dagegen fungiert die eine oder fungieren die mehreren Solarzellen als elektrische Verbraucher respektive Flächenheizung für den Fall, dass die Steueranlage das Schaltelement in den Heizmodus überführt.

Tatsächlich sorgt die Steueranlage in diesem Heizmodus dafür, dass an die jeweilige Solarzelle eine Gleichspannung angelegt wird. Dadurch fließt durch die Solarzelle von außen Strom, und zwar durch einen Einspeisestromkreis. Auf diese Weise kommt es zu einem so genannten Rückstrom oder einer Rückeinspeisung von Energie. Da die jeweilige Solarzelle in dem betreffenden Heizmodus rückwärts bestromt wird und letztlich wie eine oder mehrere in Sperrrichtung beaufschlagte Photodioden funktioniert, wird deutlich, dass durch diese so genannte Rückstromheizung Verlustwärme im Inneren der Solarzelle entsteht. Dabei wird in der Regel mit einem rückwärtsgerichteten Strom gearbeitet, der bis zur ca. 80 % oder 90 % der Nennleistung bzw. des Nennstromes der jeweiligen Solarzelle beträgt, um auf jeden Fall einen Schaden respektive eine irreversible Zerstörung des jeweiligen p-n-Überganges bzw. der Solarzelle zu verhindern.

Jedenfalls werden an bzw. in der zugehörigen Solarzelle Temperaturen beobachtet, die aufgrund der erzeugten Verlustleistung respektive Wärmeenergie deutlich oberhalb von 0 °C angesiedelt sind und folglich zum kurzfristigen Abtauen einer etwaigen Schneeschicht korrespondieren. Meistens werden Temperaturen im Bereich zwischen 1°C und 5° C, vorzugsweise ca.

3° C an der Oberfläche der jeweiligen Solarzelle erzeugt. Das kann mit Hilfe des einen oder der mehreren Außentemperatursensoren bzw. allgemein Sensoren messen werden. Dabei ist der Stromverbrauch für das Abtauen gering und die hierfür benötigten elektrische Energie wird regelmäßig in wenigen Tagen (im Allgemeinen weniger als vier Tagen) wieder erzeugt. Damit kann unter dem Strich der Wirkungsgrad über die Dauer eines Jahres gesehen in hiesigen Breiten deutlich gesteigert werden. Denn durch das Abtauen werden etwaige Abschattungseffekte oder auch Lichtverluste beim Einkoppeln des Sonnenlichtes in die Solarzelle durchgängig und über das Jahr gesehen dauerhaft vermieden.

In diesem Zusammenhang hat es sich besonders bewährt, wenn die fragliche Photovoltaikanlage auf einem Dach bzw. Hausdach montiert ist. Denn mit Hilfe der Steueranlage in Verbindung mit dem einen oder den mehreren Sensoren sowie dem einen oder den mehreren Schaltelementen lässt sich die Photovoltaikanlage und damit das Hausdach überwiegend schneefrei halten. Auf diese Weise entfallen die sonst bei der statischen Berechnung von Hausdächern zu berücksichtigenden Schneelasten und müssen lediglich die durch die Anbringung der Photovoltaikanlage verursachten dauerhaften Dachlasten Berücksichtigung finden. Diese liegen deutlich unterhalb derjenigen Lasten, die üblicherweise bei einer auf dem Dach befindlichen Schneedecke beobachtet werden. Tatsächlich beträgt das Flächengewicht der erfindungsgemäßen Photovoltaikanlage ca. 10 bis 15 kg/m², wohingegen je nach geografischem Einsatzort und damit verbundenem Schneeanfall Schneelasten von bis zu 50 oder 60 kg/m² beherrscht werden müssen.

Erfindungsgemäß reicht es nun aus, das entsprechende und mit der beschriebenen Photovoltaikanlage ausgerüstete Dach oder allgemein eine Unterstützungsfläche lediglich so auszulegen, dass die Photovoltaikanlage sicher aufgenommen werden kann. Eine zusätzliche Schneelast und deren statische Berücksichtigung kann demgegenüber entfallen. Denn die erfindungsgemäße Photovoltaikanlage hält die einzelne Solarzelle bzw. die mehreren zusammengeschalteten Solarzellenmodule komplett schneefrei. Dadurch kann beispielsweise im Rahmen der Nachrüstung bestehender Dächer, insbesondere von Hallendächern, sichergestellt werden, dass diese nicht unter etwaigen und bisher kaum zu beherrschenden Schneelasten zusammenbrechen. Denn mit Hilfe der betreffenden Photovoltaikanlage wird nicht nur elektrische Energie erzeugt und durch Einspeisung in den Solarzellenstromkreis vergütet, sondern das Dach schnee- und frostfrei gehalten. Das gelingt, ohne das weitere Heizkomponenten eingesetzt werden müssen. Dadurch wird im Ergebnis eine Schneeabwehrsystemschaltung für Photovoltaikmodulgeneratoren durch Rückeinspeisung und Nutzung der Wärmerückgewinnung der Einzelzellen zur Verfügung gestellt.

In diesem Zusammenhang versteht es sich, dass der im Heizmodus der jeweiligen Solarzelle zugeführte Strom mittels beispielsweise eines Strombegrenzers limitiert ist, um Schädigungen der Solarzelle zu vermeiden. Meistens wird so vorgegangen, dass ein oder mehrere Sensoren die Oberflächentemperatur der jeweiligen Solarzelle - wenigstens im Heizmodus - erfassen. Je nach den in die Steueranlage eingespeisten Werten der Oberflächentemperatur sorgt dann die Steueranlage unter Berücksichtigung des Strombegrenzers dafür, dass die besagte Temperatur im angegebenen Bereich gehalten wird (ca. 1°C bis 5°C). Das kann im Sinne einer Regelung erfolgen.

Nach vorteilhafter Ausgestaltung verfügt die jeweilige Solarzelle über eine Neigung gegenüber der Horizontalen respektive der Unterstützungsfläche. Dabei ist die Neigung meistens so bemessen, dass Neigungswinkel im Bereich von 10° bis 30°, vorzugsweise 15° bis 25° eingestellt werden. Meistens haben sich sogar Neigungswinkel von ca. 15° oder 20° als besonders günstig erwiesen. Denn bei einem solchen Neigungswinkel ist sichergestellt, dass der Schnee respektive die auf der Solarzelle befindliche Eisschicht sicher auf einem zwischen dem Schnee respektive der Eisschicht und der Solarzelle zuerst gebildeten Flüssigkeitsfilm von der Solarzelle hinabgleitet. D. h., ein solcher Neigungswinkel gewährleistet, dass sich nicht beispielsweise Schnee oder Eis am unteren gefälleendseitigen Rand oder der Kante der Solarzelle bildet und sammelt. Anders ausgedrückt, zeichnen sich derart geneigte Solarzellen durch einen ausgeprägten Selbstreinigungseffekt aus. Außerdem wird sichergestellt, dass die jeweilige Solarzelle nach dem beschriebenen Abtauen sowohl eis- als auch schneefrei ausgebildet ist. Dadurch kann unmittelbar wieder in den Energieerzeugungsmodus umgeschaltet werden. Hierzu mag die erfindungsgemäße Photovoltaikanlage mit Hilfe des Schnellfallsensors zuvor festgestellt haben, dass keine Schnee- oder Eisschicht mehr auf der Oberfläche vorhanden ist.

Um dies im Detail zu ermöglichen, ist der fragliche Schneefallsensor üblicherweise als Lichtschranke ausgebildet und mag als Infrarot-Lichtschranke ausgelegt sein. Dabei ist der fragliche Schneefallsensor bzw. die Lichtschranke im Regelfall an der gefälleendseitigen Kante der jeweiligen Solarzelle angeordnet. Auf diese Weise kann mit Hilfe des Schneefallsensors bzw. der an dieser Stelle realisierten Lichtschranke unschwer festgestellt werden, ob an der fraglichen gefälleendseitigen Kante der Solarzelle noch Schnee oder Eis vorhanden ist oder nicht. Üblicherweise wird sich an dieser Kante Schnee oder Eis sammeln, welches zuvor geschmolzen ist. Sollte der Schneefallsensor kein diesbezügliches Signal mehr erzeugen, so bedeutet dies, dass die fragliche Solarzelle komplett schnee- und eisfrei ist. Eine entsprechendes Signal wird von der Steueranlage nun dahingehend (in Verbindung mit weiteren Vorgaben) interpretiert, dass grundsätzlich in den Energieerzeugungsmodus wieder zurückgeschaltet werden kann.

An dieser Stelle wertet die Steueranlage meistens noch weitere Informationen und Sensoren aus. So ist meistens in der Steueranlage ein orts- und/oder jahreszeitspezifisches Profil hinterlegt. Das ortsspezifische Profil berücksichtig beispielsweise durchschnittliche Schneefallmengen am Ort der Aufstellung, und zwar kalenderzeitabhängig. Entsprechende Werte fließen auch in das jahreszeitspezifische Profil ein, welches der Steueranlage das exakte kalendarische Datum vorgibt, zusammen mit einer Prognose dahingehend, ob an dem betreffenden Kalendertag mit Schneefall zu rechnen ist und bejahendenfalls mit wie viel Zentimetern.

Je nach diesen Vorgaben wird die Steueranlage in einen aktivierten oder deaktivierten Zustand überführt. Der aktivierte Zustand ist zugleich noch daran gekoppelt, dass die Außentemperatur in einem bestimmten Temperaturintervall angesiedelt ist, beispielsweise zwischen -20 °C und +10 °C beträgt. Sofern eine dieser Bedingungen nicht erfüllt ist, wird die Steueranlage auch nicht aktiviert.

Befindet sich dagegen die Steueranlage im aktivierten Zustand, d. h. ist je nach ortsspezifischem Profil und jahreszeitspezifischem Profil mit einer gewissen Wahrscheinlichkeit an dem fraglichen Kalendertag mit Schneefall zu rechnen (beispielsweise beträgt die Wahrscheinlichkeit mehr als 30 %) und befindet sich die Temperatur im vorgegebenen Temperaturintervall (-20 °C bis +10 °C) so führt eine ständige Abfrage des Schneefallsensors dazu, dass einzelne oder alle Solarzellen bedarfsweise beheizt werden.

Tatsächlich ist die Auslegung nämlich so getroffen, dass mehrere Solarzellen zu einzelnen Solarzellensektoren bzw. Solarzellenmodulen zusammengefasst sind. Die einzelnen Solarzellensektoren können jeweils separat mit einem Schaltelement ausgerüstet sein. Wie bereits beschrieben, dient das Schaltelement zur Darstellung des Energieerzeugungs- oder des Heizmodus. Dadurch besteht die Möglichkeit, beispielsweise ein mit Hilfe der erfindungsgemäßen Photovoltaikanlage ausgerüstetes Dach lediglich partiell mit Hilfe der Steueranlage so zu beaufschlagen, dass nur einzelne ausgewählte Solarzellensektoren in den Heizmodus überführt werden, wohingegen andere benachbarte Solarzellensektoren unverändert im Energieerzeugungsmodus betrieben werden.

Die jeweilige Unterscheidung der einzelnen Solarzellensektoren kann nun im beschriebenen Beispielfall anhand des Signals des Schneefallsensors bei ansonsten gleichen Vorgaben (übereinstimmendes ortsspezifisches Profil und jahreszeitspezifisches Profil sowie gemeinsame Außentemperatur) vorgenommen werden. Wenn beispielsweise der den jeweiligen Solarzellen respektive den einzelnen Solarzellensektoren zugeordnete Schneefallsensor bei einem Solarzellensektor eine Schnee- oder Eisschicht auf der Oberfläche erkennt und bei dem anderen Solarzellensektor nicht, so sorgt die Steueranlage dafür, dass lediglich der Solarzellensektor mit der Schnee- oder Eisbedeckung von dem Energieerzeugungsmodus in den Heizmodus umgeschaltet wird. Außerdem mag die Steueranlage dafür sorgen, dass die einzelnen Solarzellensektoren je nach Signal des Schneefallsensors sukzessive oder auch getrennt voneinander in den Energieerzeugungsmodus zurücküberführt werden, und zwar je nach der jeweils erreichten Schnee- oder Eisfreiheit.

Auf diese Weise lässt sich gleichsam eine Abtauautomatik realisieren, die flexibel und bedarfsgerecht einzelne Solarzellen respektive Solarzellensektoren bzw. Solarzellenmodule beaufschlagt und je nach den dortigen Vorgaben in den Heizmodus oder den Energieerzeugungsmodus überführt. Zu diesem Zweck ist es lediglich erforderlich, dass die einzelnen Solarzellensektoren mit einem separaten Schaltelement und auch einem separaten Schneefallsensor ausgerüstet sind, um die getrennte Beaufschlagung realisieren zu können.

Dagegen wird man im Allgemeinen auf einen gemeinsamen Außentemperatursensor für die gesamte Photovoltaikanlage zurückgreifen können. Denn gravierende Schwankungen der Außentemperatur über die gesamte Fläche der Photovoltaikanlage gesehen, dürften eher unwahrscheinlich sein. Gleichwohl ist es natürlich denkbar und liegt im Rahmen der Erfindung, mit mehreren Außentemperatursensoren zu arbeiten, falls tatsächlich in unterschiedlichen Bereichen der Photovoltaikanlage mit voneinander abweichenden Außentemperaturen zu rechnen ist. Jedenfalls werden die einzelnen Solarzellensektoren im Regelfall mit Hilfe der Steueranlage im Sinne einer Intervalleinschaltung vom Energieerzeugungsmodus in den Heizmodus überführt. Das Gleiche gilt für die umgekehrte Vorgehensweise.

Diese Intervalleinschaltung respektive Umschaltung stellt sicher, dass der Strombedarf im Heizmodus nicht schlagartig ansteigt bzw. absinkt, sondern einer Stufenfunktion folgt. Dabei wird man meistens so vorgehen, dass zunächst der Solarzellensektor beaufschlagt wird, welcher im Bereich des zugehörigen Schneesensors die größte Schichtdicke der Schnee- oder Eisdecke aufweist. Danach wird der Solarzellensektor mit der Schnee- oder Eisdecke und einer demgegenüber geringeren Schichtstärke beaufschlagt usw.

Die Abschaltung des jeweiligen Solarzellensektors bzw. des Solarzellenmoduls erfolgt dann nach Maßgabe der mit Hilfe der Rückeinspeisung an seiner Oberfläche gemessenen Temperatur. Dabei mag jedem einzelnen Solarzellensektor wenigstens ein Sensor zur Messung seiner Oberflächentemperatur zugeordnet sein. D. h. jeder Solarzellensektor bzw. jedes Solarzellenmodul ist mit einem eigenen Schaltelement und wenigstens einem Sensor zur Messung der Oberflächentemperatur ausgerüstet. Dadurch kann der jeweilige Solarzellensektor individuell vom Energieerzeugungsmodus in den Heizmodus und zurück überführt werden.

Die erfindungsgemäße Photovoltaikanlage kann beispielsweise aufgeständert auf einem Flachdach oder einem Schrägdach angebracht werden. Dadurch lässt sich die unverändert vorhandene Dachoberfläche problemlos dazu nutzen, von den einzelnen Solarzellen ablaufendes Tauwasser abzuführen. Die der jeweiligen Solarzelle bzw. den mehreren Solarzellen zugeordnete beheizbare Ablaufrinne dient im Allgemeinen zur Aufnahme und Führung von Tauwasser aber auch von Regenwasser. Meistens sind mehrere Solarzellen zu einem Solarzellenmodul bzw. einem Solarzellensektor oder auch einem Solarzellenstrang in Längsrichtung zusammengefasst. Dabei kann einem solchen Solarzellenstrang eine gemeinsame Ablaufrinne zugeordnet werden.

Die Ablaufrinne ist an der gefälleendseitigen Kante der Solarzelle bzw. der Solarzellenmodule respektive des Solarzellenstranges vorgesehen. Da an dieser gefälleendseitigen Kante zugleich auch der Schneefallsensor montiert ist, finden sich dort Schneefallsensor und Ablaufrinne in unmittelbarer Nachbarschaft. Tatsächlich ist der Schneefallsensor meistens an der betreffenden gefälleendseitigen Kante der Solarzelle angeordnet, und zwar mit seiner Abtastrichtung entlang der Oberfläche der betreffenden Kante. Dagegen schließt die Ablaufrinne an die fragliche gefälleendseitige Kante unmittelbar an, so dass auf der Solarzelle gebildetes Tauwasser unmittelbar in die Ablaufrinne fließt. Gleiches gilt für Schnee- oder Eisreste, die auf einem Flüssigkeitsfilm in die Ablaufrinne hineinrutschen.

Damit die Ablaufrinne das auf diese Weise gebildete Tauwasser respektive den Schnee oder auch Eisbrocken zuverlässig abführen kann, verfügt die Ablaufrinne über die Rinnenheizung. Die Rinnenheizung wird von einer eigenen Steuereinheit beaufschlagt. Meistens ist die Steuereinheit in die bereits angesprochene Steueranlage integriert bzw. wird von dieser beaufschlagt. Dabei wird man die Auslegung im Allgemeinen so treffen, dass bei aktivierter Steueranlage nicht nur das Schaltelement vom Energieerzeugungsmodus in den Heizmodus überführt wird. Sondern die der Rinnenheizung zugeordnete Steuereinheit sorgt zugleich dafür, dass flankierend die Rinnenheizung beaufschlagt wird, um sicherzustellen, dass entstehendes Tauwasser unmittelbar, problemlos und vollständig abgeführt wird. Meistens sorgt die Steuereinheit dafür, dass die Rinnenheizung auch dann noch läuft bzw. beaufschlagt wird, wenn das Schaltelement bereits wieder in den Energieerzeugungsmodus umgeschaltet worden ist.

Im Einzelnen weist die Rinnenheizung hierzu ein oder mehrere Widerstandsdrähte auf. Dabei mag die Rinnenheizung in die Ablaufrinne integriert sein. Nach vorteilhafter Ausgestaltung ist die Rinnenheizung an einer Innenwandung der Ablaufrinne angebracht. Selbstverständlich lassen sich auch beide Varianten miteinander kombinieren.

Die Anbringung der Rinnenheizung an der Innenwandung der Ablaufrinne erfolgt meistens dergestalt, dass der fragliche Widerstandsdraht beispielsweise mit Hilfe einer wärmeleitenden Folie an der fraglichen Innenwandung befestigt wird. Bei dieser Folie mag es sich um eine selbstklebende Metallfolie, insbesondere eine selbstklebende Alufolie, handeln. Auf diese Weise wird die von dem betreffenden Widerstandsdraht erzeugte Abwärme großflächig in die Metallfolie überführt und strömt von der Metallfolie ebenfalls großflächig in die Ablaufrinne hinein, die hierdurch ein insgesamt homogenes Temperaturprofil aufweist. Dadurch ist sichergestellt, dass praktisch die gesamte Ablaufrinne beheizt wird, obwohl lediglich ein geringer Bereich in deren Längserstreckung (der Widerstandsdraht) tatsächlich eine Erwärmung erfährt.

Im Ergebnis wird eine Photovoltaikanlage zur Verfügung gestellt, mit deren Hilfe sich nicht nur der Gesamtwirkungsgrad über ein Jahr gesehen deutlich steigern lässt. Sondern die Photovoltaikanlage eröffnet einen beträchtlichen Zusatznutzen dergestalt, dass bei ihrer Anbringung auf einem Hausdach die in der Regel zusätzlich für die statische Auslegung zu berücksichtigende Schneelast nicht mehr auftritt. Das gelingt dadurch, dass ein quasi vollautomatisches Abtausystem zur Verfügung gestellt wird. Dadurch, dass die jeweilige Solarzelle zuverlässig schnee- und eisfrei gehalten wird, kann die erforderliche Dachlast respektive die Auslegung eines zugehörigen Daches darauf beschränkt werden, die fragliche Photovoltaikanlage aufnehmen zu können.

Im Übrigen hat es sich bewährt, wenn das Schaltelement den Solarzellenstromkreis von dem Einspeisestromkreis galvanisch trennt. Mit Hilfe der galvanischen Trennung wird sichergestellt, dass beispielsweise Ladungsträger vom Solarzellenstromkreis nicht in den Einspeisestromkreis oder zurück fließen können. Diese galvanische Trennung des Solarzellenstromkreises von dem Einspeisestromkreis ist im Zusammenhang mit dem Betrieb des Schaltelementes zu sehen, welches die Solarzelle entweder in den Energieerzeugungsmodus oder den Heizmodus überführt. Eine gleichzeitige Energieerzeugung und Heizung ist also nicht möglich. Dadurch werden Verluste auf ein Minimum reduziert und insbesondere eine Rekombination der Ladungsträger verhindert.

Im Detail verfügt das Schaltelement über einen Wechselrichter, welcher im Energieerzeugungsmodus die von der Solarzelle gelieferte elektrische Energie umwandelt. Im Regelfall sorgt der Wechselrichter dafür, dass die von der jeweiligen Solarzelle abgegebene Gleichspannung in eine Wechselspannung umgewandelt wird, die unmittelbar in einen externen Stromkreis eingespeist und vergütet wird. Neben dem Wechselrichter weist das Schaltelement ein Stromversorgungselement auf. Dieses dient zur Stromversorgung der Solarzelle im Heizmodus. Dabei werden der Wechselrichter einerseits und das Stromversorgungselement andererseits wechselweise betrieben und ist aufgrund der galvanischen Trennung ein gemeinsamer Betrieb ausdrücklich nicht möglich.

Für das Umschalten zwischen dem Wechselrichter und dem Stromversorgungselement mag zusätzlich ein Schalter dienen, bei welchem es sich vorteilhaft um ein Relais oder einen vergleichbaren Schalter (Thyristor) handelt. Dieses Relais wird unmittelbar von der Steueranlage beaufschlagt. Je nach seiner Stellung befindet sich das Schaltelement entweder im Energieerzeugungsmodus, in welchem die von der jeweiligen Solarzelle erzeugte elektrische Energie mit Hilfe des Wechselrichters umgewandelt wird und in den externen Stromkreis eingespeist wird. Oder der Wechselrichter ist nicht in Betrieb und wird demgegenüber das Stromversorgungselement zur Stromversorgung der Solarzelle beaufschlagt. Dann befindet sich das Schaltelement bzw. die Solarzelle im Heizmodus. In diesem Fall wird das Stromversorgungselement mit elektrischer Energie aus dem externen Stromkreis versorgt.

Der Schalter zum Umschalten zwischen dem Wechselrichter und dem Stromversorgungselement ist dabei so ausgelegt, dass der beschriebene Umschaltvorgang funkenfrei vonstattengeht. Dabei ist die Auslegung so getroffen, dass der Schalter jeweils mit einer (einstellbaren) Verzögerung arbeitet. D. h., nach Beendigung des Betriebes des Wechselrichters wird nicht unmittelbar vom Energieerzeugungsmodus in den Heizmodus umgeschaltet, sondern mit der (einstellbaren) Verzögerung. Das Gleiche gilt im umgekehrten Fall. Auf diese Weise wird der Wechselrichter im Energieerzeugungsmodus zunächst von der äußeren Wechselspannung getrennt und wird erst dann die Gleichspannung aus dem Stromversorgungselement für den Heizmodus mit der angegebenen Verzögerung zugeschaltet. Vergleichbares gilt für den umgekehrten Vorgang. D. h., nach Beendigung des Heizbetriebes bzw. des Heizmodus wird mit Hilfe des Schalters das Stromversorgungselement zunächst abgeschaltet und dann unter Berücksichtigung der (einstellbaren) Verzögerung auf den Energieerzeugungsmodus zurückgeschaltet und der Wechselrichter mit dem externen Stromversorgungsnetz verbunden.

Gleichzeitig mag das Stromversorgungselement für die elektrische Energieversorgung der Rinnenheizung sorgen. Dabei ist die Auslegung meistens so getroffen, dass die Rinnenheizung unmittelbar im Heizmodus des Schaltelementes eine Beaufschlagung erfährt. Dagegen werden die einzelnen Solarzellen respektive die einzelnen Solarzellensektoren erst sukzessive mit elektrischer Energie bzw. Gleichspannung beaufschlagt und fungieren als Flächenheizung. Dadurch wird die erforderliche und einzuspeisende elektrische Energie sukzessive erhöht und es kommt zu der Intervalleinschaltung.

Im Folgenden wird die Erfindung anhand einer lediglich ein Ausführungsbeispiel darstellenden Zeichnung näher erläutert;

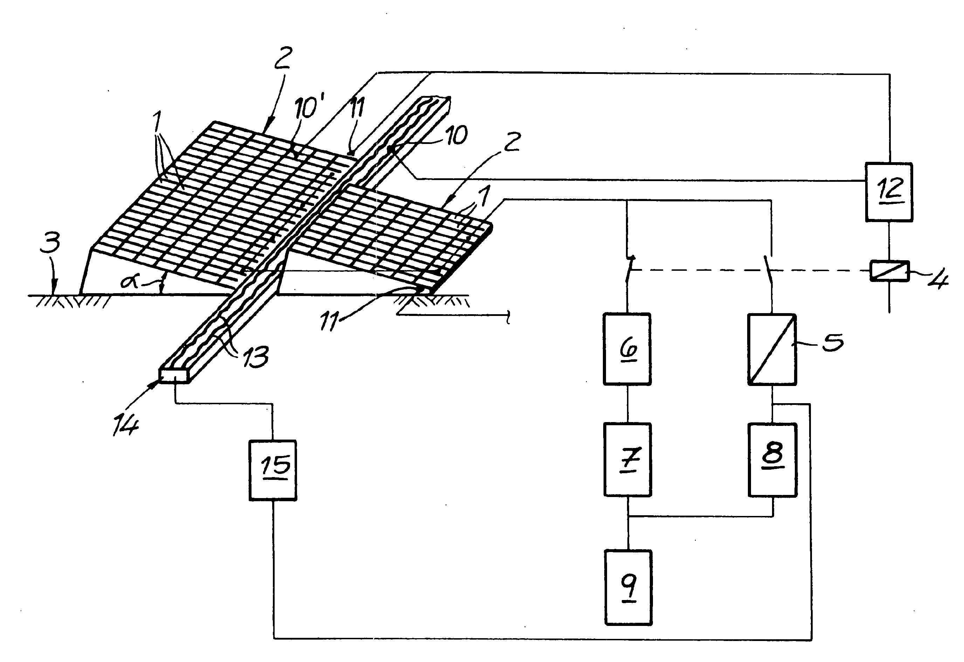

Die einzige Figur zeigt die erfindungsgemäße Photovoltaikanlage in einer schematischen Übersicht.

In der Figur ist eine Photovoltaikanlage dargestellt, die mit mehreren Solarzellen 1 ausgerüstet ist. Tatsächlich sind die jeweiligen Solarzellen 1 zu Solarzellensektoren bzw. Solarzellenmodulen 2 zusammengefasst. Im Rahmen des Ausführungsbeispiels erkennt man zwei Solarzellenmodule bzw. zwei Solarzellensektoren 2 respektive zwei Solarzellenstränge 2. Selbstverständlich ist es denkbar, mit noch mehr Solarzellensektoren respektive Solarzellenmodulen 2 zu arbeiten. Das hängt letztlich von der gewünschten Menge an mit Hilfe der Solarzellen 1 erzeugter elektrischer Energie ab.

Im dargestellten Beispielfall sind die jeweiligen Solarzellen 1 respektive Solarzellenmodule 2 auf einem Dach, vorliegend einem Flachdach 3 angeordnet. Das ist selbstverständlich nicht zwingend. Denn die Solarzellen 1 könnten auch auf einem geneigten Dach oder allgemein einer Unterstützungsfläche 3 montiert werden. Um auch im Falle des dargestellten Daches respektive Flachdaches oder Hausdaches 3 sicherzustellen, dass abtauender Schnee oder abtauendes Eis zuverlässig von den einzelnen Solarzellen 1 hinabgleitet, verfügen die einzelnen Solarzellen 1 respektive Solarzellenmodule oder Solarzellensektoren 2 über eine Neigung mit dem Neigungswinkel α gegenüber dem Flachdach 3 respektive einer hierdurch definierten Horizontalen.

Diese Neigung lässt sich anhand des Neigungswinkels α bestimmen, der im Rahmen des Beispiels zwischen 10° und 30° angesiedelt sein mag. Vorliegend beträgt der Neigungswinkel α ca. 20°. Dadurch wird sichergestellt, dass schmelzender Schnee oder schmelzendes Eis zuverlässig auf einem zwischen dem Schnee oder dem Eis und der jeweiligen Solarzelle 1 gebildeten Wasserfilm entlang der jeweiligen Solarzellen 1 rutscht und nicht mehr auf der Oberfläche verbleibt. Das wird im Einzelnen noch näher erläutert werden.

Neben den einzelnen Solarzellen 1 verfügt die Photovoltaikanlage über wenigstens ein der jeweiligen Solarzellen 1 bzw. den mehreren Solarzellen 1 bzw. dem jeweiligen Solarzellenmodus 2 nachgeordnetes Schaltelement 4, 5, 6. Das fragliche Schaltelement 4, 5, 6 kann die Stromrichtung ändern und die Photovoltaikanlage insgesamt respektive die zugehörige Solarzelle 1 in einen Energieerzeugungsmodus oder einen Heizmodus überführen. Üblicherweise befindet sich die jeweilige Solarzelle 1 und mit ihr die gesamte Photovoltaikanlage im Energieerzeugungsmodus.

Das Schaltelement 4, 5, 6 setzt sich im Detail aus einem Schalter 4 respektive einem an dieser Stelle realisierten Relais 4, einem Stromversorgungselement 5 und schließlich einem Wechselrichter 6 zusammen. Der Wechselrichter 6 dient wie üblich dazu, die von der Solarzelle 1 im Energieerzeugungsmodus ausgangsseitig zur Verfügung gestellte Gleichspannung in eine Wechselspannung umzuwandeln, die unmittelbar unter Zwischenschaltung eines Stromzählers 7 an ein elektrisches Energieversorgungsunternehmen 9 bzw. einen zugehörigen externen Stromkreis 9 abgegeben wird. Zu diesem Zweck formen der Wechselrichter 7 und der den Ertrag der Solarzellen 1 messende Stromzähler 7 einen Solarzellenstromkreis 6, 7, welcher dann von dem Relais 4 aktiviert ist, wenn sich das Schaltelement 4, 5, 6 insgesamt bzw. die zugehörige Solarzelle 1 im Energieerzeugungsmodus befindet.

Dagegen korrespondiert der ebenfalls mit Hilfe des Relais 4 des Schaltelementes 4, 5, 6 zu realisierende Heizmodus des Schaltelementes 4, 5, 6 dazu, dass vom Energieversorgungsunternehmen bzw. dem externen Stromkreis 9 unter Zwischenschaltung eines weiteren Stromzählers 8 das Stromversorgungselement 5 zur Stromversorgung der Solarzelle 1 beaufschlagt wird. Bei dem Stromversorgungselement 5 handelt es sich um einen Transformator inklusive Gleichrichter. Dieser wandelt die eingangsseitige Wechselspannung vom Energieversorgungsunternehmen 9 in eine Gleichspannung um, die zur Beaufschlagung der einen bzw. der sämtlichen Solarzellen 1 benötigt wird. Zugleich weist das Stromversorgungselement 5 (ausgangsseitig) einen Strombegrenzer auf, welcher sicherstellt, dass der ausgangsseitige Gleichstrom zur Beaufschlagung der Solarzellen 1 im Heizmodus bspw. 80 % des Nennstromes der Solarzellen nicht übersteigt. Dadurch wird sichergestellt, dass die Solarzellen 1 im Heizmodus nicht beschädigt werden, sondern lediglich als Flächenheizung fungieren, wie dies einleitend im Detail beschrieben wurde.

Wie bereits erläutert, sorgt der Schalter 4 respektive das an dieser Stelle realisierte Relais 4 dafür, dass das Schaltelement 4, 5, 6 und demzufolge die gesamte dargestellte Photovoltaikanlage entweder im Energieerzeugungsmodus oder im Heizmodus betrieben wird. Dazu verbindet das Schaltelement 4 entweder den Solarzellenstromkreis 6, 7 oder einen Einspeisestromkreis 5, 8 mit den betreffenden Solarzellen 1. Das geschieht unter Berücksichtigung einer (einstellbaren) Verzögerungszeit. D. h., beim Umschalten von beispielsweise dem Solarzellenstromkreis 6, 7 zum Einspeisestromkreis 5, 8 wird der Solrzellenstromkreis 6, 7 zunächst von der Solarzelle 1 bzw. die Solarzelle 1 vom externen Stromkreis 9 getrennt. Erst nach einer bestimmten und einstellbaren Verzögerungszeit sorgt der Schalter 4 dafür, dass die Solarzelle 1 mit dem Einspeisestromkreis 5, 8 verbunden wird. Gleiches gilt für die umgekehrte Vorgehensweise.

Im Heizmodus sind die Solarzellen 1 nun jeweils in der Lage, auf ihnen befindlichen Schnee oder eine etwaige Eisdecke zum Schmelzen zu bringen. Denn durch die Beaufschlagung mit Hilfe der Gleichspannung ausgangsseitig des Stromversorgungselementes 5 unter Berücksichtigung der Strombegrenzung wird die jeweilige Solarzelle 1 dergestalt beaufschlagt, dass der durch sie hindurchfließende Strom in Verlustwärme umgewandelt wird, die ihrerseits für den gewünschten Abtaueffekt sorgt.

Zu diesem Zweck sind mehrere Sensoren 10, 11 realisiert, die an eine Steueranlage 12 angeschlossen sind. Bei den Sensoren 10, 11 handelt es sich einerseits um einen Außentemperatursensor 10 und andererseits einen Schneefallsensor 11. Der Schneefallsensor 11 ist als Lichtschranke ausgelegt, die mit Infrarotlicht arbeitet. Der Schneefallsensor bzw. die Lichtschranke 11 befindet sich an der gefälleendseitigen Kante der Solarzelle 1 bzw. des Solarzellenmodules 2. Auf diese Weise ist der Schneefallsensor 11 in der Lage, sich endseitig der geneigten Oberfläche des Solarzellenmodules 2 ansammelnden Schnee oder etwaige Eisreste zuverlässig zu detektieren. Solange also die Lichtschranke des Schneefallsensors 11 noch unterbrochen ist bzw. der Schneefallsensor 11 Schnee oder Eis an der gefälleendseitigen Kante des Solarzellenmoduls 2 detektiert, wird ein entsprechendes Signal an die Steueranlage 12 abgegeben. Zugleich misst der Außentemperatursensor 10 die herrschende Außentemperatur.

Außerdem sind zuvor in die Steueranlage 12 weiteren Daten eingespeist worden, wie ein ortsspezifisches und/oder jahreszeitspezifisches Profil des Aufstellungsortes. Dieses Profil mag beispielsweise Prognosen über die jeweilige Schnee- bzw. Eiswahrscheinlichkeit an dem betreffenden Kalendertag abgeben. So ist es denkbar, dass beispielsweise am 15. Januar eines jeden Jahres an einem bestimmten Ort in Deutschland die Schneefallwahrscheinlichkeit oder Eiswahrscheinlichkeit ca. 30 % beträgt. Dieser Wert liegt in der Steueranlage 12 im Beispielsfall vor.

Wenn nun noch zusätzlich zu dieser genannten Wahrscheinlichkeit der Außentemperatursensor 10 eine Außentemperatur erfasst, die beispielsweise im Bereich zwischen -20 °C und +10 °C angesiedelt ist, so wird die gesamte Photovoltaikanlage bzw. die Steueranlage 12 aktiviert bzw. in einen Bereitschaftszustand überführt. Sofern zusätzlich der eine oder die mehreren Schneefallsensoren 11 Schnee oder Eis melden, wird der Heizmodus gewählt. Das bedeutet, dass zunächst die Steueranlage 12 das Relais 4 des Schaltelementes 4, 5, 6 so beaufschlagt, dass der Heizmodus eingeschaltet wird. Als Folge hiervon wird der im dargestellten Beispiel aktivierte Solarzellenstromkreis 6, 7 deaktiviert und demgegenüber der Einspeisestromkreis 5, 8 mit dem Stromversorgungselement 5 und dem zugehörigen Verbrauchszähler 8 geschlossen. Dadurch fließt nun vom Energieversorgungsunternehmen 9 zur Verfügung gestellte elektrische Energie über den Stromzähler bzw. Verbrauchszähler 8 und das Stromversorgungselement 5 in die jeweilige Solarzelle 1. D. h., es kommt zur Rückeinspeisung elektrischer Energie und zur Erwärmung der jeweiligen Solarzelle 1 infolge der in der Solarzelle 1 entstehenden Verlustwärme. Gleichzeitig wird eine Rinnenheizung 13 in einer Ablaufrinne 14 mit Strom beaufschlagt.

Tatsächlich findet sich jeweils eine Ablaufrinne 14, welche einem oder mehreren Solarzellenmodulen 2 zugeordnet ist. Dabei ist die jeweilige Ablaufrinne 14 gefälleendseitig des zugehörigen Solarzellenmodules 2 vorgesehen und an das Solarzellenmodul 2 angeschlossen. Wie bereits erläutert, verfügt die jeweilige Ablaufrinne 14 über eine Rinnenheizung 13. Die Rinnenheizung 13 setzt sich im Ausführungsbeispiel aus einem oder mehreren Widerstandsdrähten 13 zusammen. Im Rahmen der Darstellung sind zwei Widerstandsdrähte 13 realisiert, die die Rinnenheizung 13 bilden.

Die Detaillösung sieht so aus, dass die jeweilige Ablaufrinne 14 in Längserstreckung an die gefälleendseitige Kante der Solarzelle 1 bzw. des zugehörigen Solarzellenmodules 2 angeschlossen ist. Die Ablaufrinne 14 ist im Querschnitt trogartig gestaltet. Auf oder an ihrem Grund sind die einzelnen Widerstandsdrähte 13 der Rinnenheizung 13 angebracht. Zu diesem Zweck werden die Widerstandsdrähte 13 jeweils mit dem Boden der Ablaufrinne 14 thermisch gekoppelt. Dazu schlägt die Erfindung vor, dass der jeweilige Widerstandsdraht 13 mit einer ihn überdeckenden und den Wärmekontakt mit dem Boden der Ablaufrinne 14 herstellenden Metallfolie an dem fraglichen Boden befestigt ist. Bei der Metallfolie handelt es sich um eine Alufolie, die selbstklebend gestaltet sein mag. Jedenfalls wird die Ablaufrinne 14 mit Hilfe der Rinnenheizung 13 beheizt, sobald das Schaltelement 4, 5, 6 zur Änderung der Stromrichtung den Heizmodus darstellt bzw. sich im Heizmodus befindet. Das Gleiche gilt dann auch für die gesamte Photovoltaikanlage.

Man erkennt, dass der Rinnenheizung 13 eine eigene Steuereinheit 15 vorgeschaltet ist. Diese Steuereinheit 15 sorgt dafür, dass die Photovoltaikanlage bzw. das Schaltelement 4, 5, 6 im Heizmodus sicherstellt, dass die Ablaufrinne 14 beheizt wird. Außerdem gewährleistet die Steuereinheit 15, dass die fragliche Rinnenheizung 13 ggf. noch mit einer (einstellbaren) Verzögerung wieder abgeschaltet wird. Diese einstellbare zeitliche Verzögerung trägt dem Umstand Rechnung, dass beispielsweise nach Umschaltung des Schaltelementes 4, 5, 6 vom Heizmodus erneut in den Energieerzeugungsmodus gleichwohl die Ablaufrinne 14 noch abgetauten Schnee oder Eis befördern muss. D. h., die Ablaufrinne 14 muss in einem solchen Fall noch weiter mit Hilfe der Rinnenheizung 13 beaufschlagt werden, um die Abfuhr des gesamten Schnees respektive des gesamten Eises zu bewerkstelligen. Das stellt die Steuereinheit 15 sicher. Dabei mag der Steuereinheit 15 ein eigener Sensor innerhalb der Ablaufrinne 14 zugeordnet sein.

Sobald dieser Sensor keinen Schnee oder kein Eis mehr in der Ablaufrinne 14 meldet, wird die Steuereinheit 15 entsprechend informiert und sorgt dafür, dass erst dann die Rinnenheizung 13 für die Ablaufrinne 14 abgeschaltet wird. Zu diesem Zeitpunkt kann sich die übrige Photovoltaikanlage bzw. das Schaltelement 4, 5, 6 bereits - wieder - im Energieerzeugungsmodus befinden.

Beim Einschalten des einen oder der mehreren Solarzellensektoren bzw. der einzelnen Solarzellenmodule 2 trifft die Steueranlage 12 eine Auswahl, und zwar je nach den Daten der Sensoren 10, 11. Ist im Rahmen des beschriebenen Beispiels mit einer Schneefallhäufigkeit von 30 % zu rechnen und befindet sich die Außentemperatur im angesprochenen Bereich zwischen -20°C und +10°C, so wird die Photovoltaikanlage wie beschrieben aktiviert und in einen Bereitschaftszustand überführt. Sobald in diesem Zustand der Schneefallsensor 11 ein Signal abgibt, wird das Schaltelement 4, 5, 6 vom Energieerzeugungsmodus in den Heizmodus umgeschaltet. Zugleich wird die Rinnenheizung 13 beaufschlagt.

Dabei wird so vorgegangen, dass jeweils das Solarzellenmodul 2 oder die beiden Solarzellenmodule 2 beheizt werden, und zwar je nach dem, ob eines dieser beiden Solarzellenmodule 2 oder beide ein Signal abgeben. D. h., es ist entscheidend, ob die Oberfläche des fraglichen Solarzellenmodules 2 gefälleendseitig eine Schneebedeckung oder Eisbedeckung aufweist. Denn dann wird das fragliche und mit Schnee oder Eis bedeckte Solarzellenmodul 2 mit Hilfe des Stromversorgungselementes 5 mit der angesprochenen Gleichspannung beaufschlagt. Das geschieht sukzessive.

D. h., es mag zunächst das linke Solarzellenmodul 2 mit Hilfe des Stromversorgungselementes 5 zur Stormversorgung der jeweiligen Solarzellen 1 im Heizmodus beaufschlagt werden. Danach wird dann das demgegenüber rechte Solarzellenmodul 2 beaufschlagt.

Dabei geht die Erfindung so vor, dass mit Hilfe der Steueranlage 12 respektive des Schneesensors 11 zunächst das Solarzellenmodul bzw. der Solarzellensektor 2 als Flächenheizung arbeitet, bei welchem der Schneefallsensor 11 eine Schneefalldicke größter Stärke ermittelt hat. Danach wird das Solarzellenmodul bzw. der Solarzellensektor 2 beaufschlagt, der die demgegenüber geringere Stärke der Schneeschicht oder Eisschicht aufweist usw. Hierdurch werden Strom- und Spannungsspitzen bei der Abnahme der elektrischen Energie seitens des Energieversorgungsunternehmens 9 vermieden. Außerdem erfolgt eine zielgenaue Beaufschlagung der Solarzellensektoren 2, die die maximale Schnee- oder Eisbedeckung aufweisen als erstes, wobei die übrigen Sektoren 2 dann sukzessive beheizt werden.

Im beschriebenen Heizmodus werden Oberflächentemperaturen der jeweiligen Solarzelle 1 im Bereich zwischen +1°C und 5° C eingestellt. Dazu mögen zusätzliche Oberflächentemperatursensoren 10' realisiert sein, deren Temperaturmesswerte ebenfalls an die Steueranlage 12 übergeben und hier ausgewertet werden. Meistens beaufschlagt die Steueranlage 12 das Stromversorgungselement 5 im Sinne einer Regelung, um den betreffenden Temperaturbereich für die Oberflächentemperatur der Solarzellen 1 einzustellen. Ähnlich kann mit Blick auf die Rinnenheizung 13 vorgegangen werden.

Bei den Solarzellen 1 handelt es sich um monokristalline oder polykristalline Solarzellen 1, die im Regelfall aus Silizium hergestellt sind. Grundsätzlich können auch sowohl monokristalline als auch polykristalline Solarzellen 1 zum Einsatz kommen. Die sämtlichen Solarzellen 1 bzw. die einzelnen Solarzellenmodule respektive Solarzellensektoren 2 sind jeweils aufgeständert auf dem Flachdach 3 montiert. Dadurch kann das Flachdach 3 in Verbindung mit der einen oder den mehreren Ablaufrinnen 14 genutzt werden, um das Tauwasser respektive den Schnee und das Eis abzuführen. Durch die realisierte Aufständerung kann insgesamt eine schwimmende Lagerung der Solarzellen 1 zur Verfügung gestellt werden, die sowohl Temperatureffekte ausgleicht als auch zur Aufnahme von Wind geeignet ist.

## Patentansprüche

1. Verfahren zum Betrieb einer Photovoltaikanlage, mit wenigstens einer Solarzelle (1), und mit zumindest einem nachgeordneten Schaltelement (4, 5, 6), welches zur Änderung der Stromrichtung und Darstellung eines Energieerzeugungsmodus oder Heizmodus eingerichtet ist, wobei
- ein oder mehrere Sensoren (10, 11) vorgesehen sind, und wobei
- die Sensoren (10, 11) und das Schaltelement (4, 5, 6) an eine gemeinsame Steueranlage (12) angeschlossen sind, welche das Schaltelement (4, 5, 6) je nach mittels der Sensoren (10, 11) erfasster Messwerte in den Energieerzeugungsmodus oder Heizmodus überführt,
**dadurch gekennzeichnet, dass**
- der jeweiligen Solarzelle (1) bzw. den mehreren Solarzellen (1) wenigstens eine beheizbare Ablaufrinne (14) zugeordnet ist, wobei
- die Ablaufrinne (14) an einer gefälleendseitigen Kante der Solarzelle (1) respektive eines Solarzellenmoduls (2) angebracht ist und eine Rinnenheizung (13) aufweist, der eine von der Steueranlage (12) beaufschlagte Steuereinheit (15) vorgeschaltet ist, wobei ferner
- bei aktivierter Steueranlage (12) nicht nur das Schaltelement (4, 5, 6) vom Energieerzeugungsmodus in den Heizmodus überführt wird, sondern die der Rinnenheizung (13) zugeordnete Steuereinheit (12) zugleich dafür sorgt, dass flankierend die Rinnenheizung (13) beaufschlagt wird, um sicherzustellen, dass entstehendes Tauwasser unmittelbar, problemlos und vollständig abgeführt wird, und wobei
- die Steuereinheit (15) ergänzend dafür sorgt, dass die Rinnenheizung (13) auch dann noch beaufschlagt wird, wenn das Schaltelement (4, 5, 6) bereits wieder in den Energieerzeugungsmodus umgeschaltet worden ist.

2. Verfahren nach Anspruch 1, **dadurch gekennzeichnet, dass** die jeweilige Solarzelle (1) aus einem monokristallinen und/oder polykristallinen Halbleiter hergestellt ist.

3. Verfahren nach Anspruch 1 oder 2, **dadurch gekennzeichnet, dass** das Schaltelement (4, 5, 6) einen Solarzellenstromkreis (6, 7) von einem Einspeisestromkreis (5, 8) galvanisch trennt.

4. Verfahren nach einem der Ansprüche 1 bis 3, **dadurch gekennzeichnet, dass** das Schaltelement (4, 5, 6) einen Wechselrichter (6) zur Umwandlung der von der Solarzelle (1) erzeugten elektrischen Energie im Energieerzeugungsmodus sowie ein Stromversorgungselement (5) zur Stromversorgung der Solarzelle (1) im Heizmodus aufweist, die wechselweise betrieben werden.

5. Verfahren nach einem der Ansprüche 1 bis 4, **dadurch gekennzeichnet, dass** mehrere Solarzellen (1) zu einzelnen Solarzellensektoren (2) bzw. Solarmodulen (2) zusammengefasst sind, die jeweils separat mit einem Schaltelement (4, 5, 6) zur Darstellung des Energieerzeugungsmodus oder Heizmodus ausgestattet sind.

6. Verfahren nach einem der Ansprüche 1 bis 5, **dadurch gekennzeichnet, dass** die Steueranlage (12) ein Relais (4) oder einen vergleichbaren Schalter (4) als Bestandteil des Schaltelementes (4, 5, 6) beaufschlagt, welches(r) entweder den Wechselrichter (6) oder das Stromversorgungselement (5) mit der Solarzelle (1) verbindet.

7. Verfahren nach einem der Ansprüche 1 bis 6, **dadurch gekennzeichnet, dass** sie auf einem Dach (3), ggf. unter Zwischenschaltung einer Aufständerung, montiert ist.

8. Verfahren nach einem der Ansprüche 1 bis 7, **dadurch gekennzeichnet, dass** die Rinnenheizung (13) ein oder mehrere Widerstandsdrähte (13) aufweist.

9. Verfahren nach einem der Ansprüche 1 bis 8, **dadurch gekennzeichnet, dass** die Rinnenheizung (13) in die Ablaufrinne (14) integriert ist und/oder an einer Innenwandung angebracht ist.

10. Verfahren nach einem der Ansprüche 1 bis 9, **dadurch gekennzeichnet, dass** die jeweilige Solarzelle eine Neigung (α) gegenüber der Horizontalen respektive einer Unterstützungsfläche (3) aufweist.

11. Verfahren nach Anspruch 10, **dadurch gekennzeichnet, dass** die jeweilige Solarzelle eine Neigung (α) gegenüber der Horizontalen respektive der Unterstützungsfläche von ca. 10° bis 30°, vorzugsweise ca. 15° bis 25° aufweist.

## Claims

1. Method for operating a photovoltaic installation, with at least one solar cell (1) and with at least one downstream switching element (4, 5, 6) which is set up for changing the current direction and displaying an energy generation mode or heating mode, wherein
- one or a plurality of sensors (10, 11) are provided, and wherein
- the sensors (10, 11) and the switching element (4, 5, 6) are connected to a common control system (12) which moves the switching element (4, 5, 6) into the energy generation mode or heating mode, depending on measured values recorded by means of the sensors (10, 11),
**characterised in that**
- at least one heatable drainage channel (14) is assigned to the respective solar cell (1) or the plurality of solar cells (1), wherein
- the drainage channel (14) is added on an edge of the solar cell (1) or a solar cell module (2), respectively, at the end of the slope and has channel heating (13) which is connected upstream of a control unit (15) acted upon by the control system (12), wherein further
- in the case of activated control system (12), not only the switching element (4, 5, 6) is moved over from the energy generation mode to the heating mode, but rather the control unit (12) assigned to the channel heating (13) at the same time ensures that the channel heating (13) is loaded in a flanking manner, in order to ensure that condensation water produced is conveyed away directly, readily and completely, and wherein
- the control unit (15) additionally ensures that the channel heating (13) is even acted upon if the switching element (4, 5, 6) has already been switched back over to energy generation mode.

2. Method according to Claim 1, **characterised in that** the respective solar cell (1) is produced from a monocrystalline and/or polycrystalline semiconductor.

3. Method according to Claim 1 or 2, **characterised in that** the switching element (4, 5, 6) galvanically isolates a solar cell electric circuit (6, 7) from a feed electric circuit (5, 8).

4. Method according to any one of Claims 1 to 3, **characterised in that** the switching element (4, 5, 6) has an inverter (6) for converting the electrical energy generated by the solar cell (1) in energy generation mode, as well as a power supply element (5) for supplying power to the solar cell (1) in the heating mode, which can be operated alternately.

5. Method according to any one of Claims 1 to 4, **characterised in that** a plurality of solar cells (1) are combined to form individual solar cell sectors (2) or solar modules (2), which are in each case separately equipped with a switching element (4, 5, 6) for displaying the energy generation mode or heating mode.

6. Method according to any one of Claims 1 to 5, **characterised in that** the control system (12) acts upon a relay (4) or a comparable switch (4) as constituent of the switching element (4, 5, 6), which connects either the inverter (6) or the power supply element (5) to the solar cell (1).

7. Method according to any one of Claims 1 to 6, **characterised in that** it is mounted on a roof (3), if necessary with the interposing of a stand.

8. Method according to any one of Claims 1 to 7, **characterised in that** the channel heating (13) has one or a plurality of resistance wires (13).

9. Method according to any one of Claims 1 to 8, **characterised in that** the channel heating (13) is integrated into the drainage channel (14) and/or is added on an internal wall.

10. Method according to any one of Claims 1 to 9, **characterised in that** the respective solar cell has an incline (α) with respect to the horizontal or a support surface (3).

11. Method according to Claim 10, **characterised in that** the respective solar cell has an incline (α) with respect to the horizontal or the support surface of approx. 10° to 30°, preferably approx. 15° to 25°.

## Revendications

1. Procédé pour faire fonctionner une installation photovoltaïque, comprenant au moins une cellule solaire (1), et au moins un élément de commutation (4, 5, 6) monté en aval, qui est équipé pour modifier le sens de courant et présenter un mode de production d'énergie ou un mode de chauffage,
- un ou plusieurs capteurs (10, 11) étant prévus, et
- les capteurs (10, 11) et l'élément de commutation (4, 5, 6) étant raccordés à une installation de commande (12) commune, qui transfère l'élément de commutation (4, 5, 6) en fonction des valeurs mesurées enregistrées au moyen des capteurs (10, 11) dans le mode de production d'énergie ou le mode de chauffage, **caractérisé en ce que**
- au moins une rigole d'écoulement (14) chauffante étant attribuée à la cellule solaire (1) respective ou aux plusieurs cellules solaires (1),
- la rigole d'écoulement (14) étant placée sur une arête côté extrémité de pente de la cellule solaire (1) ou d'un module de cellule solaire (2) et présentant un chauffage de rigole (13), en amont duquel est branchée une unité de commande (15) alimentée par l'installation de commande (12), sachant également que,
- lorsque l'installation de commande (12) est activée, non seulement l'élément de commutation (4, 5, 6) est transféré du mode de production d'énergie dans le mode de chauffage, mais également l'unité de commande (12) attribuée au chauffage de rigole (13) garantit que le chauffage de rigole (13) est sollicité en parallèle afin de garantir que l'eau de condensation qui se forme est évacuée directement, sans problème et complètement, et
- l'unité de commande (15) garantissant en complément également que le chauffage de rigole (13) est sollicité également dans le cas où l'élément de commutation (4, 5, 6) a été déjà transféré à nouveau dans le mode de production d'énergie.

2. Procédé selon la revendication 1, **caractérisé en ce que** la cellule solaire (1) respective est fabriquée également à base d'un semi-conducteur monocristallin et/ou polycristallin.

3. Procédé selon la revendication 1 ou 2, **caractérisé en ce que** l'élément de commutation (4, 5, 6) sépare galvaniquement un circuit de cellules solaires (6, 7) d'un circuit de courant d'injection (5, 8).

4. Procédé selon l'une quelconque des revendications 1 à 3, **caractérisé en ce que** l'élément de commutation (4, 5, 6) présente un onduleur (6) pour la transformation de l'énergie électrique produite par la cellule solaire (1) dans le mode de production d'énergie et un élément d'alimentation électrique (5) pour l'alimentation électrique de la cellule solaire (1) dans le mode de chauffage, qui sont exploités de façon alternative.

5. Procédé selon l'une quelconque des revendications 1 à 4, **caractérisé en ce que** plusieurs cellules solaires (1) sont groupées en secteurs de cellule solaire (2) ou modules solaires (2) individuels, qui sont équipés à chaque fois séparément d'un élément de commutation (4, 5, 6) pour la présentation du mode de production d'énergie ou du mode de chauffage.

6. Procédé selon l'une quelconque des revendications 1 à 5, **caractérisé en ce que** l'installation de commande (12) sollicite un relais (4) ou un commutateur (4) comparable comme élément constitutif de l'élément de commutation (4, 5, 6), qui relie soit l'onduleur (6) soit l'élément d'alimentation électrique (5) à la cellule solaire (1).

7. Procédé selon l'une quelconque des revendications 1 à 6, **caractérisé en ce qu'**il est monté sur un toit (3), éventuellement avec l'intercalation d'un support.

8. Procédé selon l'une quelconque des revendications 1 à 7, **caractérisé en ce que** le chauffage de rigole (13) présente un ou plusieurs fils de résistance (13).

9. Procédé selon l'une quelconque des revendications 1 à 8, **caractérisé en ce que** le chauffage de goulotte (13) est intégré dans la goulotte (14) et/ou est placé sur une paroi intérieure.

10. Procédé selon l'une quelconque des revendications 1 à 9, **caractérisé en ce que** la cellule solaire respective présente une inclinaison (α) par rapport à l'horizontale ou une surface de soutien (3).

11. Procédé selon la revendication 10, **caractérisé en ce que** la cellule solaire respective présente une inclinaison (α) par rapport à l'horizontale ou la surface de soutien d'environ 10° à 30°, de préférence d'environ 15° à 25°.
